# EUROPEAN PATENT APPLICATION

(11) **EP 4 764 407 A1**
(43) Date of publication of application: **24.06.2026**
(21) Application number: 24223038.1
(22) Date of filing: 23.12.2024
(51) Int. Cl.: G01C 15/08, G01C 15/06, G02B 5/12

(54) **SURVEYING TARGET, SURVEYING SYSTEM AND METHOD OF OPERATING THE SAME**

(71) Applicant: Trimble Inc., Westminster, CO 80021 (US)
(72) Inventor: Bellmann, Richard, 07745 Jena (DE); Metz, Thomas, 07745 Jena (DE)
(74) Representative: Diehl & Partner

(57) **Abstract**

A surveying target 1 comprises cage 7 including a plurality of slats 9, and a target body 3 having a convex surface 5 positioned within the cage 7. The cage 7 is configured such that, in an elevational view of the surveying target 1, plural portions 17 of the surface 5 of the target body 3 are visible between adjacent slats 9. Moreover, in the elevational view, a perimeter 19 of the surveying target 1 is defined by the cage 7. The color of the slats 9 is different from a color of the surface 5 of the target body 3.

## Description

### Field

The present invention relates to a surveying target, a surveying system, and a method of operating the same.

### Background

A conventional surveying system comprises, for example, a total station configured to orient a measuring axis of an optical surveying instrument towards a surveying target, to emit a beam of measuring light along the measuring axis, to detect measuring light received back from the surveying target and to determine physical properties, such as a position of the surveying target relative to the surveying instrument, based on the detected measuring light. The surveying instrument may include devices which are configured to automatically orient the measuring axis towards the target and to track the target if it is moving. Such devices may emit a suitable beam of laser light, or a camera to record images and a computer to identify the surveying target within the recorded images. The surveying target is advantageously adapted to co-operate with these devices. For example, the surveying target may include a retroreflector for reflecting measuring light emitted from the surveying instrument, or the surveying target may have predefined patterns on its surface allowing image processing performed by the computer to identify the target within recorded images.

### Summary of the Invention

### Problem to be Solved by the Invention

With surveying targets configured to co-operate with a surveying instrument using a camera and image processing for identifying the surveying target within recorded images, problems in the identification of the target within images may occur under certain conditions, such as high or low levels of ambient light and targets located in front of certain backgrounds.

Accordingly, it is an object of the present invention to provide a surveying target which is better suited for co-operating with surveying instruments.

### Means to Solve the Problem

According to embodiments, a surveying target comprises a cage formed of a plurality of slats, and a target body having a convex surface positioned within the cage. Herein, the cage is configured such that, in an elevational view of the surveying target, plural portions of the surface of the target body are visible between adjacent slats. Moreover, the cage is configured such that at least a portion of a perimeter of the surveying target is defined by the cage. The cage and the surface of the target body have different visual appearances. For example, a color of the slats is different from a color of the surface of the target body in at least one wavelength range. With such configuration, an image of the surveying target recorded with light of this at least one wavelength range, image portions corresponding to the slats and image portions corresponding to the surface of the surveying target differ in their visual appearance based on the image contrast due to a brightness difference and color differences between the slats of the cage and the surface of the target. The plural portions of the surface of the target body visible between adjacent slats can be reliably identified in the image accordingly. Moreover, given that the geometry and the shapes of the slats of the cage is known, it is possible to determine a location of a reference position of the target body, such as a center of the target body, within the image.

Assuming a comparative example, where a surveying target is formed of only the convex target body without a cage, a problem arises in situations where a contrast between the target body and a background is low in a recorded image. It can be difficult or even impossible in such situations to determine the outline of the target body within the recorded image to a sufficient accuracy. It may then be difficult or impossible to determine the reference position, such as the center of the surveying target in the image with a desired accuracy if this determination is based on the insufficiently determined outline.

However, the surveying target according to the present embodiment comprises the cage including the slats configured such that, in the elevational view, at least a portion of a perimeter of the surveying target is defined by the cage. The portion of the perimeter may comprise 30%, 50%, 70% or even 100% of the perimeter. In the image of the surveying target, the perimeter of the cage contacts the background. This means that, in the image of the surveying target, there may well exist a low contrast between the perimeter of the surveying target and the background, but this contrast between the slats and the background is not of high importance for determining the position of the reference location of the target body within the image. The position of the reference location of the target body within the image is mainly determined based on the contrast between the slats and the surface of the target surface, and this contrast is largely independent of the background of the surveying target in the recorded image. Therefore, as long as a sufficient contrast between the slats and the surface of the target body exists in the recorded image and as long as plural portions of the surface of the target body are visible between adjacent slats in the image, the position of the reference location of the target body within the image can be determined using suitable image processing.

The surveying target according to the embodiment illustrated above is well suited for co-operation with a surveying instrument including a camera configured to record images with light of the at least one wavelength range in which the color of the slats of the cage is different from the color of the surface of the target body.

According to some embodiments, the color of the slats is a dark color, and the color of the surface of the target body is a bright color. According to specific embodiments herein, the color of the slats is black, and/or the color of the surface of the target body is white.

According to exemplary embodiments, the convex surface of the target body is of a rotationally symmetric shape. For example, the shape of the target body is the shape of a cylinder, the shape of a diabolo, or the shape of an an ellipsoid. Moreover, the surface of the target body can be ball-shaped and, in particular, the shape of a sphere.

According to exemplary embodiments, a portion of the slats extend along straight lines or along geodesic lines of the target body. In particular, projections of a portion of the slats onto the surface of the target body extend along geodesic lines on the surface of the target body. A geodesic line on the surface of a body represents the shortest path between two points on the surface of that body.

According to further exemplary embodiments, the surveying target comprises markers provided within the plural portions of the surface of the target body, wherein the markers are visible in the at least one wavelength range. Herein, a pattern of the marker provided on a first portion of the surface of the target body is different from a pattern of the marker provided on a second portion of the surface of the target body.

With such configuration, an orientation of the surveying target can be determined from images of the surveying target. Since the portions of the surface between adjacent slats can be identified based on the patterns of the markers, the orientation of the surveying target relative to the camera of the surveying system can be determined based on the recorded image.

According to further embodiments, a surveying system comprises a surveying target and an optical surveying instrument including a camera configured to record images of a surveying target. The surveying target can be the surveying target illustrated above. According to specific embodiments herein, the camera is configured to record the images with light of the wavelength range in which the slats of the cage and the surface of the target body of the surveying target appear in different colors and show a contrast relative to each other.

According to specific embodiments herein, the surveying system comprises a computer configured to identify the surveying target within the recorded images. According to further particular embodiments herein, the computer is configured to determine an orientation of the surveying target relative to the camera.

According to further embodiments, a method of operating a surveying system comprises recording at least one image using a camera, identifying a surveying target within the at least one image, orienting a measuring axis of an optical surveying instrument towards the surveying target based on a position within the at least one image of the identified surveying target, and emitting measuring light along the measuring axis towards the surveying target. The surveying target used in the method can be the surveying target illustrated above.

According to further embodiments, the method of operating the surveying system comprises detecting measuring light received back from the surveying target and determining one or more values based on the detected measuring light. The one or more values may comprise a distance of the surveying target from the optical surveying instrument and one or more angles of the oriented measuring axis relative to a reference direction. Specifically, the one or more values may include a position of the measuring target relative to the surveying system.

According to further exemplary embodiments, the method comprises determining an orientation of the surveying target relative to the camera, and determining a position of a component of the surveying target relative to the optical surveying instrument based on the one or more values determined based on the detected measuring light and the determined orientation of the surveying target.

### Brief Description of the Drawings

Figure 1 is a schematic top view of a surveying target according to a first embodiment.
Figure 2 is a schematic side view of the surveying target shown in figure 1.
Figure 3 is an illustration of an image of a surveying target according to a second embodiment illustrating an image processing.
Figure 4 is an illustration of a further image of the surveying target shown in figure 3 further illustrating the image processing.
Figure 5 is an illustration of a further image of the surveying target shown in figure 3 further illustrating the image processing.
Figure 6 is a schematic side view of a surveying target according to a third embodiment.
Figures 7A to 7F are illustrations of images of a surveying target according to a fourth embodiment at different orientations.
Figure 8 is a schematic illustration of a surveying system according to an embodiment.

### Description of embodiments

A surveying target, a surveying system including a surveying target, and a method of operating a surveying system including a surveying target according to embodiments are described in detail below with reference to the drawings.

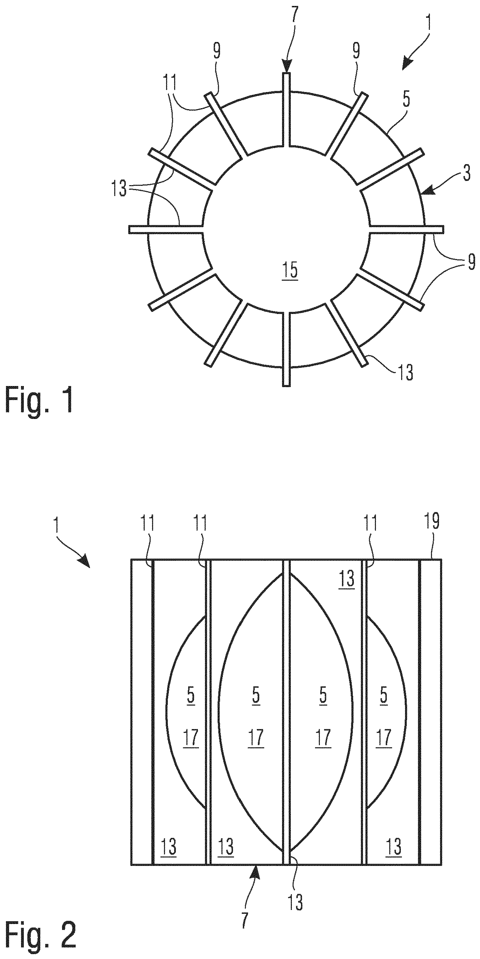

Figure 1 is an top view of a surveying target according to a first embodiment, and figure 2 is a side view of this surveying target.

The surveying target 1 comprises a target body 3 which has a surface 5 of a convex shape. In the specific example illustrated in figures 1 and 2, the convex shape is the shape of a sphere. The target body 3 is arranged within a cage 7 formed of a plurality of slats 9. The slats 9 are formed of straight walls 11 projecting orthogonally from the surface 5 of the target body 3. Since surfaces of the walls extend along straight planes, projections of the walls onto the surface 5 of the target body 5 extend along geodesic lines on the surface 5 of the target body 5.

The cage 7 further includes a circular plate 15 shown in the top view of figure 1 and covering a central portion of the slats 9 to increase the stability of the cage 7.

The slats 9 are configured such that, in an elevational view of the surveying target 1, plural portions 17 of the surface 5 of the target body 3 are visible between plural adjacent slats 9. Moreover, at least a portion of a perimeter 19 of the surveying target 1 is defined by the cage 7. In the side view of figure 2, the perimeter 19 of the surveying target 1 has a rectangular shape and completely surrounds the surveying target 1.

The surface 5 of the target body 3 has a different color than the surface of the slats 9 of the cage 7 provided by the walls 11. This difference in color exists in at least one wavelength range of light, wherein this wavelength range may include visible light and infra-red light. According to specific embodiments, the surfaces of the slats 9 have a dark color while the surface 5 of the target body 3 has a bright color. According to specific examples, the dark color is black, and the bright color is white in the visible wavelength range. The difference in colors has an effect that the surfaces of the cage 7 absorb substantially more light of the at least one wavelength range than the surface 5 of the target body, and that the surface 5 of the target body 3 reflects substantially more light of this at least one wavelength range than the surfaces of the cage 7. This means that, in an image recorded by a camera using light of the at least one wavelength range, the surfaces of the slats 9 of the cage 7 and the surface 5 of the target body 3 can be well distinguished due to the contrast provided by the color difference. Moreover, this contrast exists between the portions 17 of the surface 5 of the target body 3 and the adjacent slats 9 defining these portions 17.

This contrast in the recorded image of the surveying target 1 is independent of a background of the surveying target 1 possibly appearing in the image. In an image of the surveying target 1, the background is delimited from the surveying target at the perimeter 19 of the surveying target 1 defined by the cage 7. This means that, in the image of the surveying target 1, plural portions of the surface 5 of the target body 3 defined by the slats 9 of the cage 7 can be reliably identified due to the contrast between the surface 5 of the target body 3 and the surfaces of the slats 9 of the cage 7 independently of a color difference between the slats 9 of the cage 7 and a possible background located behind the surveying target 1.

The target body and the cage can be manufactured from any suitable material using any suitable manufacturing technology. For example, the target body 3 and two halves of the cage 7 can be manufactured by injection moulding, and the two halves of the cage can be attached to each other with the target body 3 there between. Moreover, the target body 3 and the cage 7 can be manufactured by 3D printing, or the surveying target can be manufactured in one piece using 3D printing with two materials having different colors.

Further embodiments of surveying targets will be illustrated below. Herein, components having a similar configuration and/or function as in the surveying target illustrated above are designated by the same reference numerals but supplemented by an additional character. Moreover, in order to avoid unnecessary repetitions, not all details of components which are similar in configuration and/or function to those of the surveying target illustrated above will be illustrated again. In order to fully appreciate those details, reference should be made to the above description of embodiments and also to the Summary of the Invention.

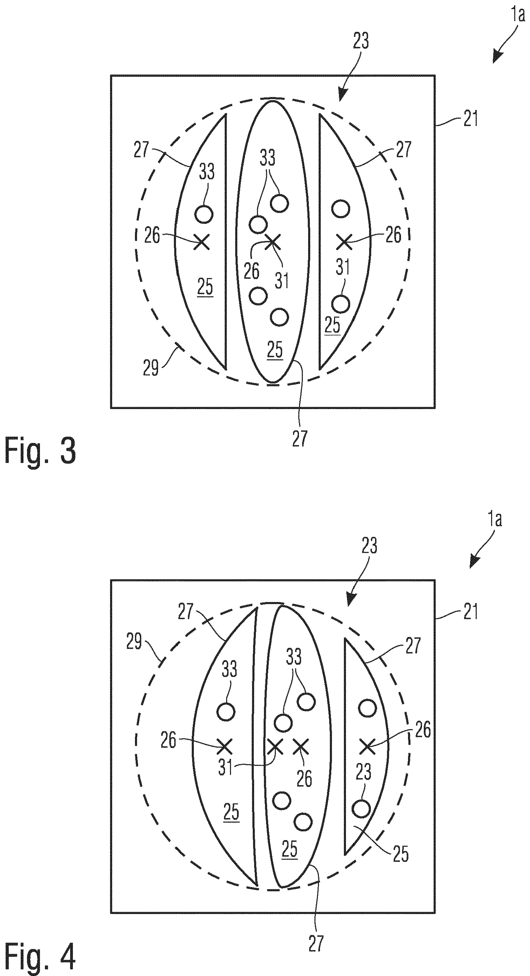

A method of processing of images of a surveying target according to a further embodiment will be illustrated with reference to figures 3, 4 and 5 below. Figures 3, 4 and 5 show illustrations of images of a same surveying target 1a oriented relative to the camera at different orientations. The surveying target 1a has a configuration similar to the surveying target shown in figures 1 and 2 in that it has a spherical target body arranged within a cage formed of plural straight wall projecting orthogonally from a surface of the target body.

When the surveying target 1a is within the field of view of a camera and not at too far a distance from the camera, an image recorded with the camera will contain a representation 23 of the surveying target at an initially unknown location within the image. A computer vision software can be used to identify the representation of the surveying target 1a within the image. The computer vision software can be trained to identify representations of the surveying target 1a by well-known machine learning techniques, for example. A portion 21 of the recorded image containing the detected representation 23 of the surveying target 1a is shown in figure 3. The portion 21 of the recorded image is further analyzed by the computer vision software which is programmed to perform the steps illustrated below.

As the portions of the surface of the target body which are visible between adjacent sluts of the cage are represented in the portion 21 of the recorded image in a color substantially different from the color of the slats of the cage, representations 25 in the image 21 of these portions of the surface can be well distinguished from their surroundings. The computer vision software is programmed to determine contours 27 of the representations 25 of the visible portions of the surface of the target body.

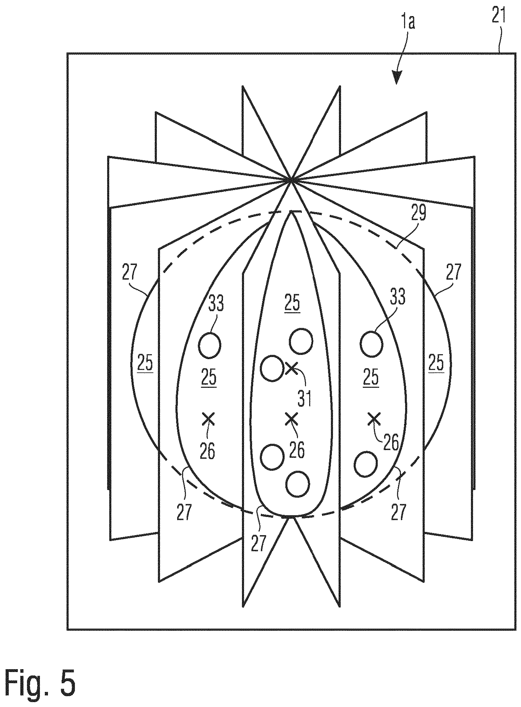

The shapes of the contours 27 of the representations 25 of the visible portions of the surface of the target body depend on the orientation of the surveying target 1a relative to the camera recording the image 21 of the surveying target 1a. Figure 4 shows a portion 21 of an image containing a representation 23 of the surveying target 1a which has been rotated by 10° in the horizontal direction relative to the surveying target 1a shown in the image illustrated in figure 3. Figure 5 shows a portion 21 of an image containing a representation 23 of the surveying target 1a which has been rotated by 30° in the vertical direction relative to the surveying target 1a shown in the image illustrated in figure 3.

It is apparent from figures 3 to 5 that shapes of the contours 27 of the representations 25 of the visible portions of the surface of the target body depend on the orientation of the surveying target relative to the camera.

The computer vision software is programmed to determine a contour 29 of a representation of the target body in the recorded image 21 if the cage of the surveying target were not present. The contour 29 of the representation of the target body in the image 21 has a shape of a circle since the target body itself has a spherical shape.

As mentioned above, the shape of the contour is a circle. The computer vision software determines the center 31 of the contour 27 in the portion 21 of the image containing the representation of the target body within the recorded image. The center 31 of the contour 29 represents the position of the center of the target body of the surveying target within the recorded image. Thus, the computer vision software has determined the position of the center of the target body 1 relative to the camera which has recorded the processed image.

The computer vision software is trained to determine the contour 29 of the representation of the target body in the recorded image 21 based on the shapes of the representations 25 of the visible portions of the surface of the target body. The shapes of the representations 25 are defined by the contours determined based on the different colors of the target body and the cage. In the present example, the computer vision software determines the center 26 of gravity of the surface area occupied by each portion of the image surrounded by one contour 27. The computer vision software is trained to determine the contour 29 of the representation of the target body in the recorded image 21 based on the arrangement of the plural centers 26 of the representations 25 of the visible portions of the target body within the image and on the arrangement of the contours 27 of the representations 25 of the visible portions of the target body within the image.

Moreover, when considering the position of the center 31 of the contour 29 of the representation of the target body relative to the centers 26 of gravity of the contours 27 of the visible portions of the target body, in the figures 3, 4 and 5, one can understand that this positional relationship is indicative of the orientation of the surveying target relative to the camera. It has been found that rotations of the surveying target relative to the camera in the horizontal direction can be precisely determined, apart from the ambiguity resulting from the twelve-fold symmetry of the cage of the surveying target. Moreover, rotations of the surveying target relative to the camera in the vertical direction can be determined as well, but with a lesser accuracy.

In order to improve the accuracy of determining amounts of rotations in the vertical direction and to solve the ambiguity in determining amounts of rotations in the horizontal direction, the surveying target 1a shown in figures 3 to 5, comprises a plurality of markers 33 provided on the surface of the target body. Specifically, a pattern of the markers 33 is provided in each portion of the surface of the target body visible between adjacent slats of the cage. Herein, each surface portion has a different pattern of markers 33, so that the surface portion facing the camera can be uniquely identified based on the pattern of the representation of the markers 33 in the image. Moreover, it is apparent from a comparison between figures 3 and 5 that the position of a given pattern of markers 33 relative to the center 31 of the contour 29 changes significantly with the rotation of the surveying target in the vertical direction. Therefore, the computer vision software is trained to evaluate the position of a central pattern of markers 33 relative to the center 31 of the contour 29 and to determine the orientation of the surveying target 1a relative to the camera also based on this evaluation.

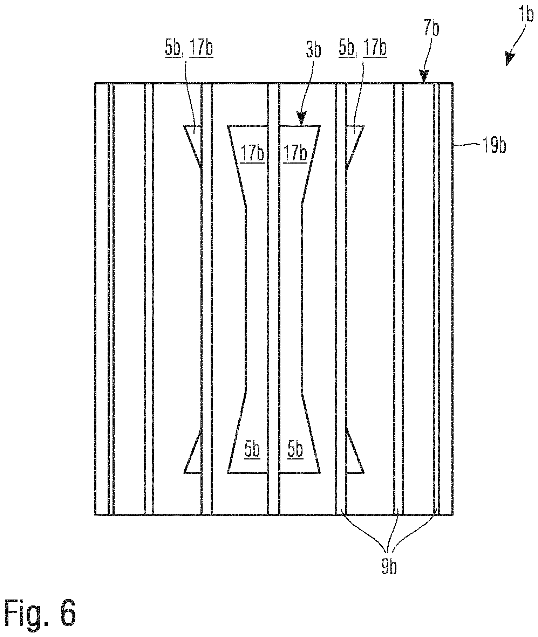

Figure 6 is a schematic side view of a surveying target 1b according to a further embodiment. The surveying target 1b shown in figure 6 differs from the surveying target shown in figures 1 and 2 in that a target body 3b has a diabolo shape rather than a ball shape. The diabolo shaped target body 3b is rotationally symmetric and has a central cylindrical portion with a conically extending portion at each end. While the ball shaped target body of the surveying target shown in figures 1 and 2 is convex in two orthogonal directions, the diabolo shaped target body 3b of the surveying target 1b shown in figure 6 has a convex shape in only one direction. The target body 3b is surrounded by a cage 7b having slats 9b of a configuration similar to that of the surveying target shown in figures 1 and 2. The slats 9b have shapes of straight walls projecting orthogonally from a surface 5b of the target body 3b. Portions 17b of the surface 5b of the target body 3b are visible between adjacent slats 9b. The cage 7b surrounds the target body 3b such that a perimeter 19b of the surveying target 1b is defined by the cage 7b in the side view of figure 6.

An image processing similar to that illustrated with reference to figures 3 to 5 can be applied to images of the surveying target b1 in order to identify for example the center of the target body 3b in the image of the surveying target and an orientation of the surveying target relative to the camera recording the image.

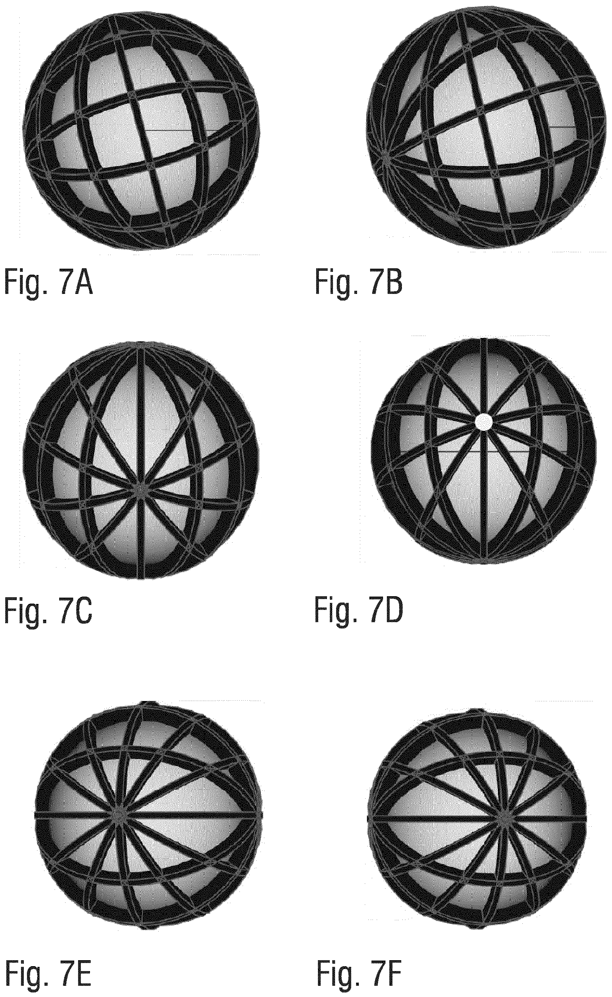

Figures 7A to 7F are illustrations of images of a surveying target according to a further embodiment at different orientations. A target body of the surveying target has a shape of a sphere and a white surface. A cage surrounding the target body has a plurality of slats extending along geodesic lines of the spherical surface. There are two groups of slats. A first group of ten slats extends between opposite poles on the sphere. A second group of twelve slats extends between two other poles on the sphere, wherein the pairs of poles of the two groups are displaced by 90° on the surface of the sphere.

In figures 7B, 7C and 7D the surveying target is rotated by 30°, 90° and 270°, respectively, relative to the surveying target of figure 7A. The surveying target of figure 7E is rotated by 90° in the vertical direction relative to the surveying target of figure 7A, and the surveying target of figure 7F is rotated by 30° in the horizontal direction and 90° in the vertical direction relative to the surveying target of figure 7A.

Plural portions of the surface of the target body are visible between pairs of adjacent slats, and the shapes of these visible portions can be analyzed by image processing in order to determine a center of the target body within the image and the orientation of the surveying target relative to the camera. The different number of slats in the two groups of slats allows to distinguish the pairs of poles which are visible in a given image. Moreover, the opposite poles of each pair of pole of a group can be distinguished by an additional visual marker applied to the poles. For example, the pole of a pair of poles visible in figure 7C is black, while the other pole of this pair visible in figure 7D is white. Based on the color of the pole, the ambiguity of the orientation of the group of slats can be solved, and it is possible to distinguish the rotation by 90° from that by 270°.

With the configuration of the slats of the surveying target shown in figures 7A to 7F, it is possible to determine the center of the target body in the image and the orientation of the surveying target relative to the camera in two directions.

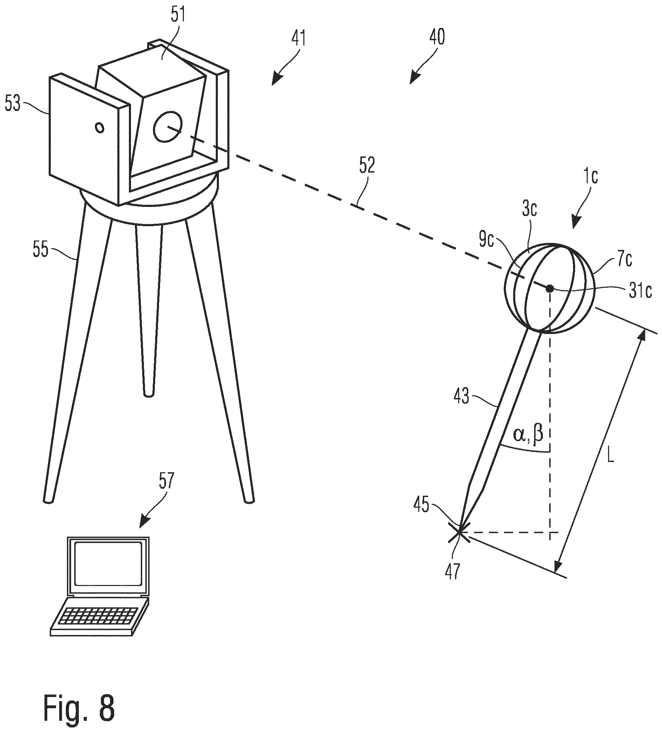

Figure 8 is a schematic illustration of the surveying system 40 according to an embodiment. The surveying system 40 comprises a surveying target 1c and an optical surveying instrument 41. The surveying target 1c includes a target body 3c and a cage 7c having a plurality of slats 9c surrounding the target body 3c. The configuration of the surveying target 1c can be any of the ones illustrated above with reference to figures 1 to 7, or any other suitable configuration of a target body having a convex surface positioned within a cage configured such that plural portions of the surface of the target body are visible between plural repairs of adjacent slats of the cage.

The surveying target 1 further comprises a straight rod 43 extending from the cage 7. A tip 45 of the rod 43 can be placed on a selected point 47 on a surface of an object. The surveying instrument 41 is used to determine the position of the point 47 relative to the surveying instrument 41. The surveying instrument 41 of the illustrated example is a total station having a camera 51 mounted on an alidade 53. The camera 51 can be rotated about a horizontal axis of the alidade 53. The alidade 53 is mounted on a tripod 55 and can be rotated about a vertical axis of the tripod.

In a method of operating the surveying system 40, the camera 51 records an image of a scenery which contains the surveying target 1c. Image processing performed by a computer vision software is used to determine the center 31c of the target body 3c within the recorded image. Thereafter, motors of the total station are operated to orient the camera 51 such that a measuring axis 52 of the total station intersects the center 31c of the target body 3c of the surveying target 1c. Thereafter, one or more pulses of measuring light are emitted by the total station along the measuring axis 52 towards the surveying target 1c, and measuring light reflected from the target body 3c is received by the surveying instrument 41. The surveying instrument 41 determines the distance of the target body 3c from the surveying instrument 41 based on the time of flight of a pulse of measuring light between the emission of the pulse from the surveying instrument 41 and the receipt of the light of that pulse reflected from the target body 3c.

Moreover, the image processing performed by the surveying instrument 41 determines two angles α, β indicating the orientation of the surveying target 1c relative to the camera 51. Using these angles α, β, the known distance L of the tip 45 of the rod 43 from the center 31c of the target body 1c, and the measured distance of the target body 3c from the surveying instrument 41, the position of the point 47 relative to the surveying instrument 41 can be determined.

The surveying instrument 41 may include a computer capable of controlling the distance measurement and running the computer vision software to perform the image processing illustrated above of the images recorded by the camera in order to identify the surveying target within the image and determining the orientation of the surveying target relative to the camera, and to perform the calculations to determine the position of the tip 45 of the surveying target 1 relative to the surveying instrument 41. The computer may include a central processing unit (CPU), memory, and a network adapter. Programs loaded into the memory via the network adapter can be executed by the processor. The computer may comprise one or more micro controllers dedicated to particular functions of controlling the surveying instrument 41. Further, the computer may comprise a physical neural network which can in particular be configured to perform some tasks involved in the image processing illustrated above. Moreover, the surveying system may also comprise an external computer 57, such as a laptop computer, used by an operator of the surveying system connected to the total station 41, for example, by wireless communication. Some or all of the required calculations and in particular the image processing can be performed using the external computer 57.

Summarized, the surveying target illustrated above is well suited for the image processing required to identify the surveying target within images. In some embodiments, the surveying target is also well suited to determine the orientation of the surveying target relative to the camera.

## Claims

1. A surveying target, comprising:
a cage (7) including a plurality of slats (9); and
a target body (3) having a convex surface (5) positioned within the cage (7);
wherein the cage (7) is configured such that, in an elevational view of the surveying target (1), plural portions (17) of the surface (5) of the target body (3) are visible between adjacent slats (9) and at least a portion of a perimeter (19) of the surveying target (1) is defined by the cage (7); and
wherein, in at least one wavelength range, a color of the slats (9) is different from a color of the surface (5) of the target body (3).

2. The surveying target according to claim 1,
wherein the color of the slats (9) is a dark color, in particular black; and
wherein the color of the surface (5) of the target body (3) is a bright color, in particular white.

3. The surveying target according to claim 1 or 2,
wherein the convex surface is of a rotationally symmetric shape.

4. The surveying target according to one of claims 1 to 3,
wherein the convex surface is ball-shaped, in particular spherical.

5. The surveying target according to one of claims 1 to 4,
wherein the plural portions (17) of the surface (5) of the target body (3) are provided with markers (33) visible in the at least one wavelength range; and
wherein a pattern of the markers (33) provided on a first portion (17) of the surface (5) of the target body (3) is different from a pattern of the markers (33) provided on a second portion (17) of the surface (5) of the target body (3).

6. The surveying target according to one of claims 1 to 5,
wherein at least a portion of the slats (9) extend along straight lines; and/or
wherein projections of at least a portion of the slats (9) onto the surface (5) of the target body (3) extend along geodesic lines on the surface (5) of the target body (3).

7. A surveying system, comprising:
the surveying target (1) according to one of claims 1 to 6, and
an optical surveying instrument (41) including a camera (51) configured to record images (21) with light of the at least one wavelength range.

8. The surveying system according to claim 7, further comprising
a computer (57) configured to identify the surveying target (1c) within the images (21).

9. The surveying system according to claim 8,
wherein the computer (57) is further configured to determine an orientation (α, β) of the surveying target (1c) relative to the camera (51).

10. A method of operating a surveying system, the method comprising:
recording at least one image (21) using a camera (51);
identifying the surveying target (1c) of one of claims 1 to 6 within the at least one image (21); and
determining at least one of a distance of the surveying target (1c) from a surveying instrument (41) and an orientation of the surveying target (1c) relative to the camera (51).

11. The method of claim 10, further comprising
orienting a measuring axis (52) of an optical surveying instrument (41) towards the surveying target (1c) based on a position within the at least one image (21) of the identified surveying target (1c); and
emitting measuring light along the measuring axis (52) towards the surveying target (1).

12. The method according to claim 11,
wherein the distance of the surveying target (1c) from the surveying instrument (41) is determined based on the detected measuring light received back from the surveying target (1c).

13. The method according to one of claims 10 to 12, further comprising
determining an orientation (α, β) of the surveying target (1c) relative to the camera (51);
determining, based on the detected measuring light received back from the surveying target (1c) and the determined orientation (α, β) of the surveying target (1c), a position of a component (45) of the surveying target (1c) relative to the optical surveying instrument.
